# EUROPÄISCHE PATENTSCHRIFT

(11) **EP 1 016 901 B1**
(45) Veröffentlichungstag und Bekanntmachung des Hinweises auf die Patenterteilung: **27.07.2005**
(21) Anmeldenummer: 99120513.9
(22) Anmeldetag: 15.10.1999
(51) Int. Cl.: G03B 21/56, G03B 21/62

(54) **Bildwiedergabeanordnung mit Projektionsfläche für Durchlichtprojektion und Schallabstrahlung**
Image reproduction device with projection screen for back-projection and sound emission
Dispositif de reproduction des images avec écran pour rétro-projection et émission du son

(30) Priorität: 29.12.1998 DE 19860626
(43) Veröffentlichungstag der Anmeldung: 05.07.2000
(73) Patentinhaber: Harman Becker Automotive Systems GmbH, 76307 Karlsbad (DE)
(72) Erfinder: Bachmann, Wolfgang, Prof. dr., 41516 Grevenbroich (DE); Krump, Gerhard, Dr., 94374 Schwarzach (DE); Regl, Hans-Jürgen, Dipl.-Ing., 40477 Düsseldorf (DE)
(74) Vertreter: Patentanwälte Westphal, Mussgnug & Partner

(56) Entgegenhaltungen:
- CH-A- 128 778
- DE-A- 19 747 597
- US-A- 1 923 072
- US-A- 3 218 924
- US-A- 4 743 090
- US-A- 5 321 789
- US-A- 5 701 359

## Beschreibung

### Technisches Gebiet

Die Erfindung betrifft eine Bildwiedergabeanordnung mit einer Projektionsfläche, die eine Kernschicht mit regelmässiger Zellstruktur und wenigstens eine mit der Kernschicht verbundene Deckschicht umfasst und bei der die regelmässigen Zellstrukturen von Zellwänden gebildet werden, die senkrecht zur Fläche der jeweiligen Deckschicht verlaufen, und mit einer Projektoranordnung, die eine Bildinformation mittels Lichtstrahlen auf die Projektionsfläche überträgt, wobei von der Projektionsfläche wenigstens eine der Deckschichten transparent ausgebildet ist und wobei die Projektoranordnung an der Seite der Projektionsfläche angeordnet ist, welche einem Zuschauer abgewandt ist, und wobei die Zellwände der Kernschicht reflektierend ausgebildet sind.

### Stand der Technik

Allgemein werden im wesentlichen zwei Arten von Projektionswänden unterschieden: Durchlicht- und Auflicht-Projektionswände. Bei den Durchlichtprojektionswänden wird das Bild auf der von dem Betrachter abgewandten Seite der Projektionswand erzeugt. Derartige Projektionsanordnungen sind beispielsweise als Fernsehbildröhren bekannt.

Bei den Auflichtprojektionswänden wird das Bild hingegen auf der Betrachterseite der Projektionswand erzeugt, indem die wiederzugebenden Bilder von einem von der Projektionswand abgesetzten Projektor auf die Projektionsebene der Projektionswand abgestrahlt werden. Diese Anordnungen sind beispielsweise aus der Kino- oder Diatechnik bekannt, wo zur Bildwiedergabe beispielsweise ein Dia hinterleuchtet wird und das austretende Lichtstrahlenbündel -nachdem es eine Optik- durchlaufen hat auf eine Leinwand auftrifft. Anstelle des Einsatzes von Dias kann bei der Auflichtprojektion die jeweilige Bildinformation auch von drei Lichtkanonen der Farben rot, gelb und blau bzw. Mischung der verschiedenen Farbanteile bereitgestellt werden. Gerade in letzter Zeit sind dazu Anordnungen bekannt geworden, die mit Laserlicht arbeiten. Abgesehen davon, dass die Auflichtprojektion im Vergleich zur Durchlichtprojektion den Nachteil aufweist, dass Zuschauer oder andere Gegenstände die ausgesandten Lichtstrahlen abschatten können, ist der Einsatz von Laserlicht auch deshalb nicht ungefährlich, weil in jedem Fall sichergestellt werden muss, dass die von den Laserkanonen ausgesandten Laserstrahlen keine Verletzungen beim Zuschauer hervorrufen.

Sollen neben den Bildereignissen auch Schallereignisse wiedergegeben werden, wird bei beiden Projektionsarten auf die allgemeine Lautsprechertechnik zurückgegriffen, indem entsprechende Lautsprecher oder Lautsprecherboxen im wesentlichen an der Peripherie der jeweiligen Projektionswand angeordnet werden. Diese Anordnungsweise ist deshalb notwendig, um dem Betrachter den Eindruck zu vermitteln, dass die jeweiligen Schallereignisse von dem Geschehen auf der Projektionswand herrühren oder zumindest mit dein Bildgeschehen im Zusammenhang stehen.

Abgesehen davon, daß zu einer angemessenen Beschallung des Raums neben den reinen Projektionsflächen zur Bilddarstellung auch eine Vielzahl von herkömmlichen Lautsprechern in entsprechender Größe zur Verfügung gestellt werden müssen, ist die Verwendung solcher Beschallungsanordnungen auch deshalb nachteilig, weil bei Anordnungen mit relativ kleinen Projektionsflächen und guten Schallwiedergabeergebnissen der Raum- bzw. Flächenbedarf zur Schallwiedergabe im Vergleich zur Größe der Projektionswand bzw. des Bildes unangemessen groß ausfällt. Bei relativ großen Projektionsflächen tritt das letztbenannte Phänomen weniger stark in Erscheinung. Jedoch hat sich gezeigt, dass bei Projektionsflächen mit großen Bilddiagonalen ein auffälliges Missverhältnis bei der Ortung von Bild- und Tonereignissen hervorgerufen wird, wenn die Beschallungsanordnung seitlich zu den Projektionsflächen angeordnet wird.

Eine eingangs genannte Bildwidergabeanordnung ist beispielsweise aus der US 4 743 090 A bekannt. In der US 1 923 072 A ist zudem ein Projektionsschirm mit Schallabstrahlung durch wenigstens einen zur Biegewellenanregung geeigneten Wandler beschrieben.

Es liegt der Erfindung die Aufgabe zugrunde, eine Projektionswand anzugeben, welche die im Zusammenhang mit der Schallwiedergabe genannten Nachteile der bekannten Anordnungen beseitigt. Darstellung der Erfindung

Die Aufgabe wird den in Anspruch 1 angegebenen Merkmalen gelöst. Vorteilhafte Aus- und Weiterbildungen sind den Ansprüchen 2 bis 9 entnehmbar. Wird die Bildwiedergabeanordnung gemäß Anspruch 1 ausgebildet, sind wegen der Durchlichtprojektion Verletzungen des Zuschauers völlig ausgeschlossen. Außerdem wird durch die Anregung der Projektionsfläche durch die Wandler gleichzeitig zur Verbindung von Bild- und Tonereignissen beigetragen.

Da die Projektoranordnung gemäß Anspruch 1 eine Mehrzahl von Lichtquellen umfaßt, lassen sich Bildwiedergabeanordnungen mit sehr geringer Bautiefe insbesondere dann ausbilden, wenn für jeden Bereich der Projektionsfläche der angeregt werden soll, eine eigenständige Lichtquelle vorhanden ist.

Wird auf den eben erläuterten Aufwand für Lichtquellen verzichtet, lassen sich Bildwiedergabeanordnungen mit geringer Bautiefe auch dann ausbilden, wenn die von der oder den wenigen Lichtquellen ausgesandten Lichtstrahlen schräg auf die Zellwandungen projiziert werden.

Umfaßt jede Zellstruktur wenigstens 2 parallel zueinander verlaufende Zellwandungen, kann bei 6-eckförmiger Ausbildung der Zellstrukturen diese Struktur dazu genutzt werden, um die additive Farbmischung innerhalb einer Zelle herbeizuführen. Dazu müssen lediglich die verschieden farbigen Lichtstrahlen schräg auf die jeweiligen Zellwandungen projiziert werden. Durch die Reflektion der aufgebrachten Lichtstrahlen erfolgt dann die additive Farbmischung im gemeinsamen Schnittpunkt der verschieden farbigen Lichtstrahlen.

Eine besonders gute Reflektion der schräg auf die Zellwände aufgebrachten Lichtstrahlen ist dann gegeben, wenn die Zellwände der Kernschicht verspiegelt ausgebildet sind.

Ist die Deckschicht, welche der Projektoranordnung abgewandt ist, mit einer Vielzahl von Streulinsen oder Streukörpern versehen, lassen sich Abschattungen, die bei der Durchlichtprojektion wegen der Zellstruktur nicht vermieden werden können, weitgehend unterdrücken.

Außerdem ist die Verwendung von Streukörpern insbesondere dann hilfreich, wenn Laserlicht auf die Projektionsfläche aufgebracht wird, denn durch die Streuung wird die Bündelung des Laserlichts aufgehoben, womit gleichzeitig die Gefährlichkeit des Laserlichts für das menschliche Auge beseitigt wird.

Auch ist mittels der hier angegebenen Bildwiedergabeanordnung die Farbwiedergabe problemlos möglich. Hierzu ist lediglich die Deckschicht, welche der Projektoranordnung abgewandt ist, mit Pixeln der Farben Rot, Grün und Blau zu versehen. Anstatt der entsprechenden farblichen Gestaltung der jeweiligen Deckschicht können die verschiedenfarbigen Pixel auch durch eine Füllung der Zellen oder eine entsprechende Prägnierung der Zellwände bereitgestellt werden. Hierzu muß lediglich sichergestellt werden, dass die Füllung der Zellen oder die Zellwände unter entsprechender Anregung die Grundfarben Rot, Grün und Blau emittieren. Werden die verschiedenfarbigen Pixel, welche auch als Farbtrippel bezeichnet werden, durch entsprechende Lichtquellen angeregt, lassen sich auch Zwischenfarben entsprechend der additiven Farbmischung auf der Projektionsfläche darstellen.

Auf eine Ausgestaltung der Deckschicht bzw. der Zellstrukturen kann dann verzichtet werden, wenn die jeweilige Projektoranordnung wenigstens eine rote, eine grüne und eine blaue Lichtquelle umfaßt und die jeweils von drei verschiedenfarbigen Lichtquellen ausgesandten Lichtstrahlen einen gemeinsamen Schnittpunkt haben. Auch in diesem Fall wird die Darstellung von Zwischenfarben durch die additive Farbmischung der sich scheidenden Lichtstrahlen herbeigeführt.

Der Aufwand für die Projektoranordnung läßt sich gemäß dadurch erheblich reduzieren, wenn eine Ablenkanordnung vorhanden ist, welche den oder die von der Projektoranordnung ausgestrahlten Lichtstrahlen über zumindest einen Teil der Projektionsfläche ablenken. Schon an dieser Stelle sei darauf hingewiesen, daß unter Ablenken nicht nur eine Richtungsänderung des von der jeweiligen Lichtquelle ausgestrahlten Lichtstrahls verstanden wird, sondern auch die Richtungsänderung der Lichtquelle selbst mit umfaßt ist.

Die Bildwiedergabe wird am wenigsten dadurch behindert, wenn die Wandler im Randbereich der Projektionsfläche angeordnet werden.

### Kurze Darstellung der Figuren

Es zeigen:
- Figur 1: eine Bildwiedergabeanordung gemäß der Erfindung;
- Figur 2: eine Detaildarstellung einer Bildwiedergabeanordnung;
- Figur 3: eine weitere Darstellung gemäß Figur 2; und
- Figur 4: eine weitere Darstellung gemäß Figur 2.

### Wege zum Ausführen der Erfindung

Die Erfindung soll nun anhand der Figuren näher erläutert werden.

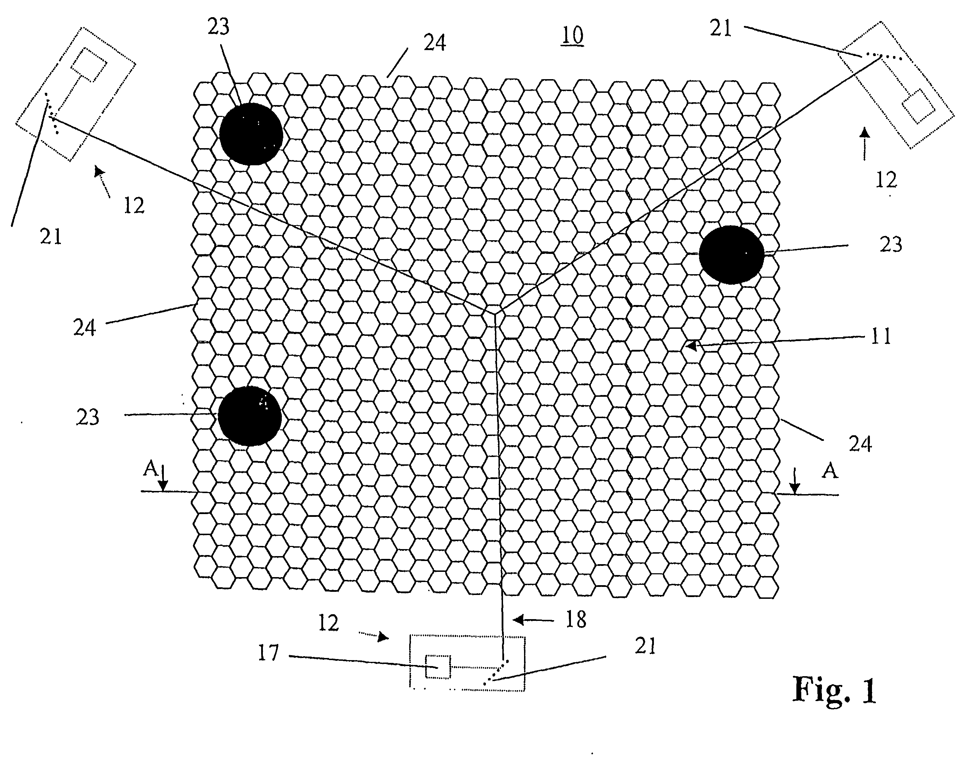

In Fig. 1 ist eine Bildwiedergabeanordnung 10 gezeigt, wobei auf eine maßstäbliche Darstellung der Verhältnisse verzichtet wurde. Diese Bildwiedergabeanordnung 10 wird im wesentlichen von der Projektionsfläche 11 und der Projektoranordnung 12 gebildet. Da die Darstellung gemäß Fig. 1 die Bildwiedergabeanordnung 10 so zeigt, wie sie von einem Zuschauer wahrgenommen wird, der unter Nutzung dieser Bildwiedergabeanordnung 10 beispielsweise einen Spielfilm ansehen will, ist in der Darstellung gemäß Fig. 1 die hinter der Projektionsfläche 11 befindliche Projektoranordnung 12 nicht sichtbar.

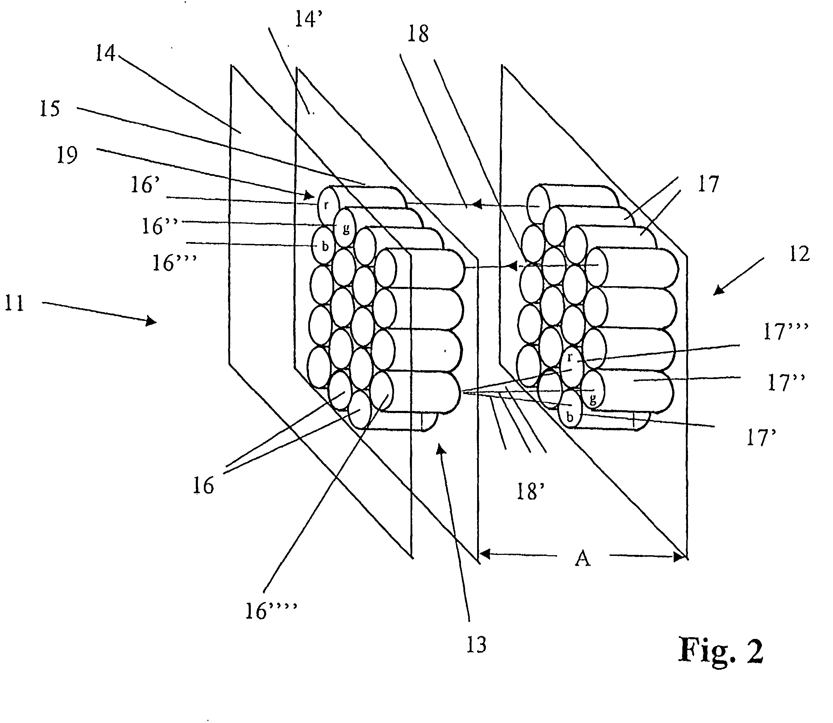

In Fig. 2 ist eine Projektionsfläche 11 näher gezeigt. Dieser Darstellung ist entnehmbar, daß die Projektionsfläche 11 eine Kernschicht 13 und zwei Deckschichten 14, 14' umfaßt und dass die beiden Deckschichten 14, 14' an jeweils gegenizberliegenden Oberflächen der Kernschicht 13 mit dieser verbunden sind. Um die für die Tonwiedergabe dieser Projektionsfläche 11 erforderlichen Eigenschaften herbeizuführen, weist die Kernschicht 13 eine regelmäßige Zellstruktur auf, welche von einer Vielzahl von Zellen 16 mit rundem Querschnitt gebildet wird. Dabei verlaufen die Zellwände 15 im wesentlichen rechtwinklig zur Fläche der Projektionswand 11.

Ferner ist in Fig. 2 noch eine Projektoranordnung 12 gezeigt, welche in geringem seitlichen Abstand A zur Projektionswand 11 angeordnet ist. Diese Projektoranordnung 12, umfaßt eine Mehrzahl von Lichtquellen 17, welche ihre Lichtstrahlen 18 im wesentlichen parallel zu den Zellwänden 15 der Kernschicht 13 aussenden. Auch ist der Darstellung gemäß Fig. 2 entnehmbar, daß jeder der Zellen 16 eine Lichtquelle 17 zugeordnet ist. Ferner ist der Darstellung gemäß Fig. 2 entnehmbar, daß unter Einfluß einer Lichtquelle 17 die in der linken oberen Ecke veranschaulichten Zellen 16' bis 16''' die Farben Rot (r), Grün (g) und Blau (b) emittieren. Vorliegend wird dies dadurch erreicht, daß die gesamte Deckschicht 14, welche der Projektoranordnung 12 abgewandt ist, eine Beschichtung der für die drei Zellen 16' bis 16''' gezeigten Art aufweist. Auch wenn im in Fig. 2 gezeigten Ausführungsbeispiel die Endungen von nur drei Zellen 16' bis 16''' ein für die additive Farbmischung erforderliches Farbtrippel 19 bilden, kann in einem nicht gezeigten Ausführungsbeipiel jede Farbe (r, g, b) eines Farbtrippels 19 beipielsweise von jeweils vier einander nebengeordneten Zellen 16 gebildet sein.

Auch ist zur additiven Farbmischung nicht erforderlich, daß die Deckschicht 14 mit einer Mehrzahl von Farbtrippeln 19 beschichtet ist. Vielmehr kann die Farbdarstellung auf der Deckschicht 14 auch dadurch ermöglicht werden, daß die Lichtquellen 17 farbiges Licht ausstrahlen. Diese Farbigkeit der Lichtquellen 17 ist in Fig.2 für die in der unteren rechten Ecke der Projektoranordnung 12 näher gezeigt. Deutlich ist dieser Darstellung entnehmbar, daß zur Farbdarstellung die Lichtquellen 17' bis 17''' jeweils rotes (r), grünes (g) und blaues (b) Licht aussenden. Auch ist sichtbar, daß die Lichtquellen 17' bis 17''' nicht jeweils eine Zelle 16 beleuchten müssen. Vielmehr kann die additive Farbmischung auch dadurch herbeigeführt werden, daß die Lichtstrahlen 18' von drei verschiedenfarbigen Lichtquellen 17' bis 17''' sich in einer Zelle 16'''' schneiden. Um Verständnisproblemen in diesem Zusammenhang vorzubeugen, sei darauf hingewiesen, die in diesem Abschnitt läuterte Farbdarstellung, welche farbige Lichtquellen 17' bis 17''' erfordert, lediglich eine Alternative zur der Farbdarstellung gemäß dem letzten Anschnitt ist.

Um die zwangsläufig von den Zellwänden 15 an der Deckschicht 14 hervorgerufenen Abschattungen auszuschließen, sollte die Deckschicht 14 eine streuende Wirkung haben. Dies kann durch Ausbildung einer Vielzahl von Streulinsen oder Streukörpern erreicht werden. Vorliegend wurde die streuende Wirkung dadurch hergestellt, daß die sonst glatte Deckschicht 14 angerauht wurde, wodurch eine Vielzahl von Riefen (nicht gezeigt) ausgebildet wurden. Nur der Vollständigkeit halber sei darauf hingewiesen, daß diese eben angeführte angerauhte Deckschicht 14 auch in der Lage ist, Lichtstrahlen 18 zu streuen und damit für das menschliche Auge unschädlich zu machen, die von Laserlichtquellen emittiert werden.

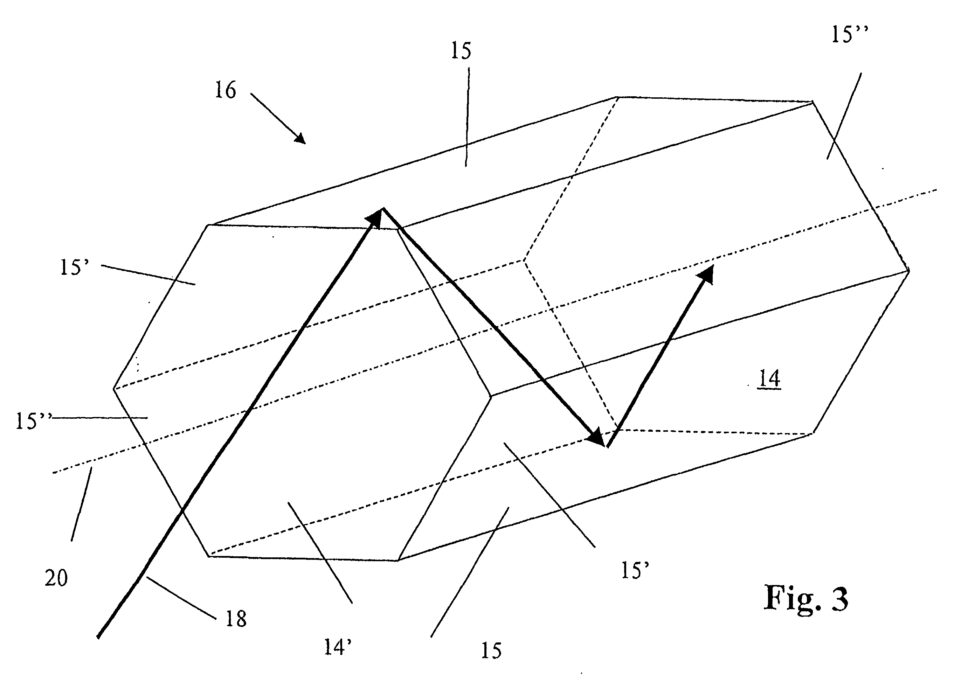

In Fig. 3 ist eine Zelle 16 der auch in der Kernschicht 13 gemäß Fig. 1 verwendeten Art vergrößert gezeigt. Bedingt durch den bienenwaben-förmigen Querschnitt dieser Zelle 16 besteht diese Zelle 16 aus 6 Zellwandungen 15. Dabei liegen jeweils zwei dieser Zellwandungen 15 parallel zueinander. Wird nun ein von einer Lichtquelle (in Fig. 3 nicht gezeigt) ausgesandter Lichtstrahl 18, nachdem er die transparente Deckschicht 14' durchdrungen hat, schräg, d.h. in einem Winkel zur durch diese Zelle 16 verlaufenden Achse 20 auf die jeweilige Zellwandnung 15 aufgebracht, wird dieser Lichtstrahl 18 von den jeweils parallel liegenden Zellwandungen 15 reflektiert und gelangt so bis zur Deckschicht 14. Diese Verhältnisse sind in Fig. 3 für einen Lichtstrahl 18 näher gezeigt. Wie leicht einzusehen ist, können die übrigen parallel-liegenden Zellwandungen 15' und 15" dieser Zelle 16 zur Reflexion der beiden übrigen zur additiven Farbmischung notwendigen Lichtstrahlen 18 (in Fig. 3 nicht gezeigt) verwendet werden, wenn das Ergebnis der additiven Farbmischung auf der an die in Fig. 3 gezeigten Zelle 16 angrenzenden Deckschicht 14 abgebildet werden soll.

Soll eine besonders gute Reflexen erreicht werden, ist es notwendig Zellwandungen 15, 15' und 15", welche zur Reflexion von Lichtstrahlen 18 vorgesehen sind, mit einem spiegelnden Überzug zu versehen. Wird jedoch als Lichtquelle 17 eine Laserlichtquelle verwendet, kann wegen der großen Energiedichte der Laserlichtstrahlen 18 auch auf eine Verspiegelung der zur Reflexion vorgesehenen Zellwandungen 15, 15' und 15" verzichtet werden.

Bei der bisherigen Darstellung der Verhältnisse gemäß Fig. 3 wurde davon ausgegangen, daß farbiges Licht (r, g, b) auf die Zellwandungen 15, 15' und 15" aufgebracht wurde. Verschiedenfarbige Lichtstrahlen 18 sind aber dann nicht notwendig, wenn die Zellwandungen 15, 15' oder 15'' bei entsprechender Bestrahlung mit beispielsweise einem farbneutralen Licht eine rote, eine grüne und eine blaue Emission hervorrufen. Die gleiche Wirkung kann dann erreicht werden, wenn jede Zelle 16, welche zu einem Farbtrippel 19 mit beispielsweise drei Zellen 16 gehört, mit drei verschiedenen und unter Bestrahlung jeweils rotes, grünes und blaues Licht emittieren Gasen gefüllt ist.

Sollen die jeweiligen Lichtstrahlen 18 so wie in Fig. 3 schräg auf die Zellwandungen 15, 15' und 15" auftreffen, ist es nicht notwendig, daß die entsprechenden Lichtquellen 17 in einem solchen räumlichen Zusammenhang zur Projektionsfläche 11 angeordnet werden, der in Fig. 2 gezeigt ist. Vielmehr kann beim schrägen Auftreffen der Lichtstrahlen 18 auf die Zellwandungen 15, 15' und 15" auch die jeweilige Lichtquelle 17 seitlich neben der Projektionsfläche 11 angeordnet werden. Eine solche Anordnung ist in Fig. 1 durch die Strichelung der Projektionsanordnungen 12 angedeutet. Auch ist Fig. 1 in dieser Beziehung entnehmbar, daß jede der in Fig. 1 angedeuteten Lichtquellen 17 nur einen Lichtstrahl 18 aussendet, welcher dann durch eine beispielsweise in jeder Lichtquelle 17 integrierte und vorliegend von einem beweglichen Spiegel gebildete Ablenkanordnung 21 über die Projektionsfläche 11 zur entsprechenden Zelle 16 abgelenkt wird.

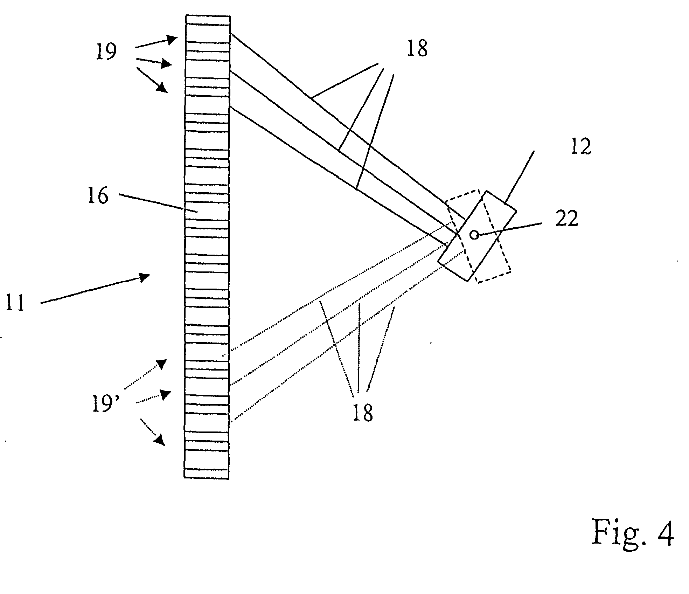

In Fig. 4 ist ein Schnitt AA durch eine Projektionsfläche 11 gemäß Fig. 1 gezeigt. Bei diesem Ausführungsbeispiel ist die Projektoranordnung 12 mit den verschiedenen Lichtquellen 17 mittig zur in Fig. 1 gezeigten Projektionsfläche 1 angeordnet. Zur Anregung der verscheidenen zu einem Farbtrippel 19 gehörenden Zellen 16 werden von der Projektoranordnung 12 drei Lichtstrahlen 18 gleichzeitig ausgegeben. Andere Farbtrippel 19' der Projektionsfläche 11 werden dadurch angeregt, daß die Projektionsanordnung 12 beispielsweise um den Drehpunkt 22 gedreht wird.

Daß die Projektionsfläche 11 gleichzeitig mit Wandlern 23 versehen ist, welche die Projektionsfläche 11 zur Biegewellenstrahlung und damit auch Tonwiedergabe anregen können, ist Fig. 1 entnehmbar. Auch sind in Fig. 1 die nur schematisch gezeigten Wandler 23 nahe dem Rand 24 der Projektionsfläche 11 angeordnet, um die für die Durchlichtprojektion notwendige Transparenz der Projektionsfläche 11 zu erhalten.

## Patentansprüche

1. Bildwiedergabeanordnung
mit einer Projektionsfläche (11), die eine Kernschicht (13) mit regelmäßiger Zellstruktur und wenigstens eine mit der Kernschicht (13) verbundene Deckschicht (14,14') umfaßt und bei der die regelmäßigen Zellstrukturen von Zellwänden (15) gebildet werden, die senkrecht zur Fläche der jeweiligen Deckschicht (14, 14') verlaufen, und
mit einer Projektoranordnung (12), die eine Bildinformation mittels Lichtstrahlen (18) auf die Projektionsfläche (11) überträgt,
wobei von der Projektionsfläche (11) wenigstens eine der Deckschichten (14, 14') transparent ausgebildet ist,
wobei die Projektoranordnung (12) an der Seite der Projektionsfläche (11) angeordnet ist, welche einem Zuschauer abgewandt ist, und
wobei die Zellwände (15) der Kernschicht (13) reflektierend ausgebildet sind, **dadurch gekennzeichnet,**
**daß** die Projektoranordnung (12) eine Mehrzahl von Lichtquellen (17) umfasst,
**daß** die von der Projektoranordnung (12) ausgesandten Lichtstrahlen (18) zu einer parallel zu den Zellwänden durch die Zelle (16) verlaufenden Achse (20) in einem von 0° Grad verschiedenen Winkel verlaufen, bevor die Lichtstrahlen (18) auf der Zellwandung (15, 15', 15'') dieser Zelle (16) auftreffen, und
**daß** wenigstens ein Wandler (23) vorhanden ist, welcher die Projektionsfläche (11) zur Biegewellenstrahlung anregt.

2. Bildwiedergabeanordnung nach Anspruch 1,
**dadurch gekennzeichnet,**
**daß** jede Zellstruktur wenigstens 2 parallel verlaufende Zellwandungen (15, 15', 15'') aufweist.

3. Bildwiedergabeanordnung nach einem der Ansprüche 1 oder 2,
**dadurch gekennzeichnet,**
**daß** die Zellwände (15) der Kernschicht (13) verspiegelt ausgebildet sind.

4. Bildwiedergabeanordnung nach einem der Ansprüche 1 bis 3,
**dadurch gekennzeichnet,**
**daß** die Deckschicht (14), welche der Projektoranordnung (12) abgewandt ist, mit einer Vielzahl von Streulinsen oder Streukörpern versehen ist.

5. Bildwiedergabeanordnung nach einem der Ansprüche 1 bis 4,
**dadurch gekennzeichnet,**
**daß** die Deckschicht (14), welche der Projektoranordnung (12) abgewandt ist, mit Pixeln der Farben Rot, Grün und Blau versehen ist oder die verschiedenfarbigen Pixel durch eine Füllung der Zellen und/oder Prägnierung der Zellwände (15) bereitgestellt sind und
**daß** jeweils drei verschiedenfarbige Pixel ein Farbtrippel (19) bilden.

6. Bildwidergabeanordnung nach einem der Ansprüche 1 bis 5,
**dadurch gekennzeichnet,**
**daß** die Projektoranordnung (12) wenigstens eine rote, eine grüne und eine blaue Lichtquelle (17) umfaßt und
**daß** zur Farbdarstellung jeweils von drei verschiedenfarbigen Lichtquellen (17; 17' bis 17''') ausgesandten Lichtstrahlen (18) einen gemeinsamen Schnittpunkt haben.

7. Bildwidergabeanordnung nach einem der Ansprüche 1 bis 5,
**dadurch gekennzeichnet,**
**daß** die Projektoranordnung (12) wenigstens eine rote, eine grüne und eine blaue Lichtquelle (17) umfaßt und
**daß** zur Farbdarstellung jedes einer Farbe zugeordnete Pixel eines Farbtrippels (19) von nur einer der drei verschiedenfarbigen Lichtquellen (17, 17' bis 17''') bestrahlt wird.

8. Bildwiedergabeanordnung nach einem der Ansprüche 1 bis 7,
**dadurch gekennzeichnet,**
**daß** eine Ablenkanordnung (21) vorhanden ist, welche die von der Projektionsanordnung 12 ausgegebenen Lichtstrahlen (18) über zumindest einen Teil der Projektionsfläche (18) ablenken.

9. Bildwiedergabeanordnung nach einem der Ansprüche 1 bis 8,
**dadurch gekennzeichnet,**
**daß** der oder die Wandler (23) nahe dem Rand (24) der Projektionsfläche (11) angeordnet sind.

## Claims

1. An image reproduction system including a projection surface (11), which includes a core layer (13) with a regular cell structure and at least one cover layer (14, 14') connected to the core layer and in which the regular cell structures are constituted by cell walls (15), which extend perpendicular to the surface of the associated cover layer (14, 14') and including a projector device (12), which transmits image information by means of light beams (18) onto the projection surface (11), at least one of the cover layers (14, 14') of the projection surface (11) being transparent, the projector device (12) being arranged at the side of the projection surface (11) which is directed away from a viewer and the cell walls (15) of the core layer (13) being reflective, **characterised in that** the projector device (12) includes a plurality of light sources (17), that the light beams (18) emitted from the projector device (12) extend to an axis extending parallel to the cell walls through the cell (16) at an angle differing from 0° before the light beams (18) impinge on the cell wall (15, 15', 15") of this cell (16) and that at least one converter (23) is present which stimulates the projection surface (11) to flexural wave radiation.

2. An image reproduction system as claimed in Claim 1, **characterised in that** each cell structure has at least two parallel extending cell walls (15, 15', 15").

3. An image reproduction system as claimed in one of Claims 1 to 2, **characterised in that** the cell walls (15) of the core layer (13) are mirror coated.

4. An image reproduction system as claimed in one of Claims 1 to 3, **characterised in that** the cover layer (14), which is directed away from the projector device (12), is provided with a plurality of scattering lenses or scattering bodies.

5. An image reproduction system as claimed in one of Claims 1 to 4, **characterised in that** the cover layer (14), which is directed away from the projector device (12), is provided with pixels with the colours red, green and blue or different coloured pixels are provided by a filling of the cells and/or impregnation of the cell walls (15) and that three pixels of different colours constitute a colour triplet (19).

6. An image reproduction system as claimed in one of Claims 1 to 5, **characterised in that** the projector device (12) includes at least one red, one green and one blue light source (17) and that light beams (18) emitted from three different coloured light sources (17; 17' to 17''') have a common intersection point for the purpose of colour representation.

7. An image reproduction system as claimed in one of Claims 1 to 5, **characterised in that** the projector device (12) includes at least one red, one green and one blue light source (17) and that, for the purpose of colour representation, each pixel, associated with a colour, of a colour triplet (19) is irradiated by only one of the three different colour light sources (17, 17' to 17''').

8. An image reproduction system as claimed in one of Claims 1 to 7, **characterised in that** a deflector device (21) is present, which deflects the light beams (18) emitted by the projector device (12) over at least a portion of the projection surface (18).

9. An image reproduction system as claimed in one of Claims 1 to 8, **characterised in that** the converter(s) (23) are arranged close to the edge (24) of the projection surface (11).

## Revendications

1. Dispositif de reproduction d'image comprenant une surface de projection (11), qui comprend une couche centrale (13) ayant une structure de cellule régulière et au moins une couche de recouvrement (14, 14') reliée à la couche centrale (13) et dans laquelle les structures de cellule régulières sont formées par des parois de cellule (15) qui s'étendent perpendiculairement à la surface de la couche de recouvrement respective (14, 14'), et
un arrangement de projecteur (12), qui transmet une information d'images au moyen de rayons de lumière (18) sur la surface de projection (11),
au moins une couche de recouvrement (14, 14') étant réalisée de manière transparente, à partir de la surface de projection (11),
l'arrangement de projecteur (12) étant disposé sur le côté de la surface de projection (11) qui est opposée au spectateur, et
les parois de cellule (15) de la couche centrale (13) étant réalisées de manière réfléchissante, **caractérisé en ce que**,
l'arrangement de projecteur (12) comprend plusieurs sources de lumière (17),
les rayons de lumière issus de l'arrangement de projecteur (12) s'étendent avec un angle non nul par rapport à un axe qui s'étend parallèlement aux parois de cellule à travers la cellule (16), avant que les rayons de lumière (18) ne parviennent sur la paroi de cellule (15, 15', 15") de cette cellule (16), et
au moins un transducteur (23) est prévu, qui excite la surface de projection (11) pour un rayonnement acoustique.

2. Dispositif de reproduction d'images selon la revendication 1, **caractérisé en ce que** chaque structure de cellule comprend au moins deux parois de cellule (15, 15', 15") qui s'étendent parallèlement.

3. Dispositif de reproduction d'images selon l'une des revendications 1 ou 2, **caractérisé en ce que** les parois de cellule (15) de la couche centrale (13) sont pourvues de miroirs.

4. Dispositif de reproduction d'images selon l'une des revendications 1 à 3, **caractérisé en ce que** la couche de recouvrement (14), qui est opposée à l'arrangement de projecteur (12), est pourvue d'une pluralité de lentilles divergentes ou de corps de diffusion.

5. Dispositif de reproduction d'images selon l'une des revendications 1 à 4, **caractérisé en ce que** la couche de recouvrement (14), qui est tournée en éloignement de l'arrangement de projecteur (12), est pourvue de pixels de couleur rouge, vert et bleu ou bien les pixels de différentes couleurs sont fournis par un remplissage des cellules et/ou imprégnation des parois de cellule (15) et **en ce que** trois pixels de couleurs différentes forment respectivement un triplet de couleurs (19).

6. Dispositif de reproduction d'images selon l'une des revendications 1 à 5, **caractérisé en ce que** l'arrangement de projecteur (12) comprend au moins une source de lumière rouge, verte, et bleue (17) et **en ce que** pour la réalisation de couleur, les rayons de lumière (18) issus respectivement de trois sources de lumière de couleurs différentes (17 ; 17' à 17"') présentent un point d'intersection commun.

7. Dispositif de reproduction d'images selon l'une des revendications 1 à 5, **caractérisé en ce que** l'arrangement de projecteur (12) comprend au moins une source de lumière rouge, verte et bleue (17) et **en ce que** pour la réalisation de couleurs, chaque pixel d'un triplet de couleurs (19) associé à une couleur est irradié par seulement une des trois sources de lumière à couleurs différentes (17, 17' à 17"').

8. Dispositif de reproduction d'images selon l'une des revendications 1 à 7, **caractérisé en ce qu'**un arrangement de déviation (21) est prévu, qui dévie les rayons de lumière (18) issus de l'arrangement de projection (12) sur au moins une partie de la surface de projection (11).

9. Dispositif de reproduction d'images selon l'une des revendications 1 à 8, **caractérisé en ce que** le ou les transducteur(s) (23) sont disposés à proximité du bord (24) de la surface de projection (11).
